(19) Europäisches Patentamt
European Patent Office
Office européen des brevets

(11) **EP 4 421 041 A1**

(12) **EUROPEAN PATENT APPLICATION**

(43) Date of publication:
**28.08.2024   Bulletin 2024/35**

(21) Application number: **23158662.9**

(22) Date of filing: **27.02.2023**

(51) International Patent Classification (IPC):
*C01F 7/57* (2022.01)        *C02F 1/52* (2023.01)

(52) Cooperative Patent Classification (CPC):
**C01F 7/57; C02F 1/5245**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ITS Water Group SA**
**1204 Geneva (CH)**

(72) Inventors:
• **FEDOSEIENKO, Mykhailo**
  **49101 Dnipro (UA)**
• **GORDIIENKO, Viktor**
  **69097 Zaporizhzhia (UA)**
• **OSTREYKO, Yevgen**
  **49027 Dnipro (UA)**

(74) Representative: **KATZAROV S.A.**
**Geneva Business Center**
**12 Avenue des Morgines**
**1213 Petit-Lancy (CH)**

(54) **A METHOD FOR PREPARING ALUMINUM-CONTAINING COAGULANTS BASED ON ULTRA-HIGH-BASICITY POLYALUMINIUM CHLORIDE**

(57)    The present invention relates to methods of producing aluminium-containing coagulants based on ultra-high-basicity polyaluminium chlorides (PAC), with $Al_2O_3$ content of more than 15.0% (wt. %), relative basicity within $70.0 \div 75.0\%$ and long shelf life of at least 18 months. The production method can create a wide range of concentrations of an aqueous solution of polyaluminium chloride and is particularly useful for obtaining high concentrations of this substance. Compared to conventional coagulant production processes, the processes described herein are unique since they do not require the use of aluminium metal as a starting material. The products of the process are suitable for use in the technology of drinking water treatment and wastewater treatment for various branches of industrial production.

EP 4 421 041 A1

**Description**

**FIELD OF THE INVENTION**

The present invention relates to a method for producing aluminium-containing coagulants based on ultra-high-basicity polyaluminium chlorides (PAC) having $Al_2O_3$ content of more than 15.0%, relative basicity within $70.0 \div 75.0\%$ and long shelf life of at least 18 months.

**BACKGROUND OF THE INVENTION**

The aluminium-containing coagulants are used in many water treatment applications The most common aluminium-containing coagulants are aluminum sulfate, aluminum chloride, polyaluminium chloride and sodium aluminate. Polyaluminium chloride (PAC) can be defined by the general formula:

$$Al_m(OH)_nCl_{3m-n},$$

where *0<n<3m* and m must be greater than 0.

The degree of neutralization (i.e. the ratio of $[OH^-]$ to $[Al^{3+}]$) is commonly known as basicity, but in the case of PAC the term "relative basicity" is more appropriate, which is determined as follows

$$B = \frac{n}{3m} \times 100\%$$

Although the issue of the formation of many species of PAC has been studied for more than a century, the mechanism of polymerization is still debatable. It is generally known that these compounds form various oligomers and polymers in aqueous solutions (US 2007/0092433 A1). Relative basicity is a significant factor in determining the distribution of PAC species, thus, they can be roughly divided into four groups, based on differences in production technology: low-basicity PAC with relative basicity in the range from -1.0% to -47.0%; high-basicity PAC with relative basicity in the range of -47.0 to 65.0%; ultra-high-basicity PAC with relative basicity in the range from ~65.0% to ~83.0% and ultrabasicity PAC, with the relative basicity of more than 83.0% which is aluminium chlorohydrate (ACH).

Most of the methods described in the literature involve the dissolution of metallic aluminium in hydrochloric acid (US 3891745) or the electrolysis process (US 3113911). The main disadvantages of such methods are the considerable duration of the metal dissolution process (2 to 16 hours).) and the relatively high cost of aluminium metal or the energy component of the cost price, as well as the complexity of the technological process and hardware support of production due to the release of hydrogen during the dissolution of the metal in acid.

GB 2113666 A discloses use of organic catalysts to increase the rate of dissolution of aluminium metal or its alloys, which were mainly polysaccharides. The use of catalysts partially solved the issues related to the rate of aluminium metal dissolution but did not benefit the complexity of the technological process, namely the release of hydrogen during synthesis, and did not decrease the cost of a commercial product. An additional disadvantage of the process described in this invention is the relatively short shelf life of the finished product not exceeding 6 months (over time, the solution decomposes with precipitation, which in most cases is aluminium hydroxide).

The production of high-basicity and ultra-high-basicity PAC and PACS using the technology without the release of hydrogen during synthesis is described in numerous disclosures, such as US 5246686 A and US 5076940 A. Typically, low-basicity aluminium chlorosulfate, which was obtained by dissolving aluminium trihydrate in a mixture of hydrochloric and sulfuric acids, reacts with an alkaline earth metal compound (e.g. calcium carbonate) to obtain high-basicity polyaluminium chlorosulfates. One of the disadvantages of this reaction is that it leads to the formation of insoluble sulfates of alkaline earth metals (e.g. calcium sulfate), which need to be removed from solutions of high-basicity and ultra-high-basicity PAC and PACS through such processes as filtration or centrifugation. This fact imposes certain restrictions on the use of this technology on an industrial scale. Similar issues concerning precipitate formation are also found in processes involving the reaction of aluminium sulfate with a suspension of calcium carbonate and calcium chloride (US 4981673 A).

The process that avoids the formation of precipitate such as calcium sulfate is described in US 5348721 A. The method disclosed therein requires the initial production of aluminium polychlorosulfate with a relatively high basicity ($40 \div 50\%$). This product then reacts with an alkali metal compound (sodium carbonate) at a temperature of 50°C to 70°C. Reactions carried out at lower temperatures, namely at 40°C, lead to the formation of a gel-like substance. One of the problems with this process is that the formation of carbon dioxide can cause problems in industrial production.

An alternative process for obtaining high-basicity and ultra-high-basicity PAC and PACS is described in US 3929666 A. In this disclosure, the authors note that a solution containing $SO_4^{2-}$, $Al^{3+}$ and $Cl^-$ ions, is mixed with a solution containing sodium or potassium aluminate. The reaction is carried out at a temperature of 40°C or less and a gel is obtained, which must be further dissolved by raising the temperature to one in the range of 50°C to 80°C. Due to difficulties in pumping gels from one location to another and problems caused by poor heat transfer in gels, the process described in this invention has limited value in industrial applications.

US 5985234 A discloses a process that avoids many of the problems of the previously mentioned methods. It can be used for the production of compounds with a relative basicity of more than 70.0%, using basic aluminium chlorides and basic aluminium chlorosulfates with a low relative basicity (25.0% or less) as the starting material. Synthesized polyaluminium chlorides and polyaluminium chlorosulfates remain liquid, i.e. they do not turn into a gel, and they are not prone to the formation of a precipitate of calcium sulfate. In addition, they can be produced without adding heat, thus avoiding the formation of unwanted by-products. In this disclosure, in addition to the methods for obtaining polyaluminium chlorides and polyaluminium chlorosulfates with high and ultra-high relative basicity, hardware differences in the technological process, due to which the formation of liquid and relatively stable products (at least 7 months) is possible are also disclosed. US 5985234 A discloses that the mixing of sodium aluminate with low-basicity polyaluminium chloride or chlorosulfate occurs under high shear conditions, that is, using centrifugal pumps, mixers and homogenizers. It is believed that the high-shear mixing effect eliminates the formation of local concentration inhomogeneities that occur during the combination of solutions, and also contributes to the decomposition of gel-like particles before they can merge. The main disadvantages of this process are the short shelf life of finished products, which does not exceed 7 months; the content of the main substance in terms of $Al_2O_3$ is not more than 10.5%, provided that the relative basicity is reached close to 50.0%, and the increase in the content of the main substance in terms of $Al_2O_3$ up to 16.0% is possible if the relative basicity increases proportionally to 83.0%.

Consequently, there is still a need for a method that allows obtaining aluminium-containing coagulants based on ultra-high-basicity polyaluminium chlorides (PAC) with the content of $Al_2O_3$ more than 15.0%, relative basicity within $70.0 \div 75.0\%$ and long shelf life of at least 18 months.

## SUMMARY OF THE INVENTION

An aspect of the present invention provides a method for producing aluminium-containing coagulant that have $Al_2O_3$ content of more than 15.0% (wt. %) and relative basicity in the range of 70.0-75.0%, wherein the method comprises

(a) providing an aqueous solution of low-basicity polyaluminium chloride (PAC) having a density of $1.25 \div 1.30$ g/dm$^3$ and wherein the polyaluminium chloride (PAC) has the content of $Al_2O_3$ of $15.0 \div 18.0\%$ (wt. %) and relative basicity in the range of $36.0 \div 47.0\%$;

(b) providing an aqueous solution of sodium aluminate having the content of $Al_2O_3$ of $20.0 \div 25.0\%$ (wt. %), a caustic modulus of $1.3 \div 1.5$ and a density of $1.45 \div 1.60$ g/dm$^3$;

(c) mixing the aqueous solution of low-basicity polyaluminium chloride (PAC) of step (a) with the aqueous solution of sodium aluminate of step (b) with a high shear mixer having a shear rate of more than 7000 s$^{-1}$ and constant mixing, wherein the aqueous solution of low-basicity polyaluminium chloride (PAC) is supplied at constant volume flow rate selected from 11 to 21 m$^3$/h at the inlet of a high shear mixer, and the aqueous solution of sodium aluminate is supplied at gradual decrease in volume flow from initial flow selected from 3.0 - 5.0 m$^3$/h to final flow selected from 1.5 - 0.1 m$^3$/h at the inlet of the high shear mixer;

(d) heating up to 95±10°C during 1-3 hours under constant mixing;

(e) cooling at temperature selected from 20°C to 50°C, preferably temperature selected from 20°C to 30°C and recovering aluminium-containing coagulant.

## DETAILED DESCRIPTION OF THE INVENTION

All publications, patent applications, patents, and other references mentioned herein are incorporated by reference in their entirety. The publications and applications discussed herein are provided solely for their disclosure prior to the filing date of the present application. Nothing herein is to be construed as an admission that the present invention is not entitled to antedate such publication by virtue of prior invention. In addition, the materials, methods, and examples are illustrative only and are not intended to be limiting.

In the case of conflict, the present specification, including definitions, will control. Unless defined otherwise, all technical and scientific terms used herein have the same meaning as is commonly understood by one of skill in art to which the subject matter herein belongs. As used herein, the following definitions are supplied in order to facilitate the understanding of the present invention.

The term "comprise" is generally used in the sense of include, that is to say permitting the presence of one or more features or components. Also as used in the specification and claims, the language "comprising" can include analogous embodiments described in terms of "consisting of " and/or "consisting essentially of'.

As used in the specification and claims, the singular form "a", "an" and "the" include plural references unless the context clearly dictates otherwise.

As used in the specification and claims, the term "and/or" used in a phrase such as "A and/or B" herein is intended to include "A and B", "A or B", "A", and "B".

As used herein, the term "at least one" means "one or more" and also encompasses the terms "at least two", "at least three", "at least four", etc.

The invention relates to developing a method for obtaining an aluminium-containing coagulant having a long shelf life of at least 18 months, wherein said aluminium-containing coagulant has the content of $Al_2O_3$ of more than 15.0% (wt %) and relative basicity within 70.0÷75.0%. The desired method is achieved due to use of low-basicity polyaluminium chloride (PAC), having the content of $Al_2O_3$ of 15.0÷18.0% (wt %) and the relative basicity of 36.0÷47.0%, which is diluted in water (typically in an autoclave) to achieve a density of 1.25 1.30 g/dm³, while in the prior art, the low-basicity polyaluminium chloride (PAC) has relative basicity of 5.0÷25.0%. According to the method of the invention, the relative basicity increases due to the reaction of aqueous solution of low-basicity polyaluminium chloride (PAC) with an aqueous solution of sodium aluminate that has a caustic modulus of 1.3=1.5 and a density of 1.45÷1.60 g/dm³, with the use of a high shear mixer with a shear rate of more than 7000 s⁻¹ and constant mixing in an autoclave and heating up to 95±10°C during 1-3 hours.

An aspect of the present invention provides a method for producing aluminium-containing coagulant that have $Al_2O_3$ content of more than 15.0% (wt. %) and relative basicity in the range of 70.0-75.0%, wherein the method comprises

(a) providing an aqueous solution of low-basicity polyaluminium chloride (PAC) having a density of 1.25 ÷ 1.30 g/dm³ and wherein the polyaluminium chloride (PAC) has the content of $Al_2O_3$ of 15.0÷18.0% (wt. %) and relative basicity in the range of 36.0÷47.0%;

(b) providing an aqueous solution of sodium aluminate having the content of $Al_2O_3$ of 20.0 ÷ 25.0% (wt. %), a caustic modulus of 1.3÷1.5 and a density of 1.45÷1.60 g/dm³;

(c) mixing the aqueous solution of low-basicity polyaluminium chloride (PAC) of step (a) with the aqueous solution of sodium aluminate of step (b) with a high shear mixer having a shear rate of more than 7000 s⁻¹, preferably a shear rate selected from 7000 s⁻¹ to 20,000 s⁻¹, and constant mixing, wherein the aqueous solution of low-basicity polyaluminium chloride (PAC) is supplied at constant volume flow rate selected from 11 to 21 m³/h at the inlet of a high shear mixer, and the aqueous solution of sodium aluminate is supplied at gradual decrease in volume flow from initial flow selected from 3.0 - 5.0 m³/h to final flow selected from 1.5 - 0.1 m³/h at the inlet of the high shear mixer;

(d) heating up to 95±10°C during 1-3 hours under constant mixing;

(e) cooling at temperature selected from 20°C to 50°C, preferably temperature selected from 20°C to 30°C and recovering aluminium-containing coagulant.

Polyaluminium chloride (PAC) is an acidic solution made of the elements aluminium, chlorine, hydrogen and oxygen. Polyaluminium chloride (PAC) can be defined by the general formula:

$$Al_m(OH)_nCl_{3m-n},$$

where *0<n<3m* and m must be greater than 0.

The degree of neutralization (i.e. the ratio of [OH⁻] to [Al³⁺]) is commonly known as basicity, but in the case of PAC the term "relative basicity" is more appropriate, which is typically determined as follows

$$B = \frac{n}{3m} \times 100\%$$

Sodium aluminate has typically the formula $Na_2O \cdot Al_2O_3$, or in some embodiments the formula can be $NaAlO_2$.

The use of an aqueous solution of low-basicity polyaluminium chloride (PAC) with relative basicity of 36.0÷47.0% and the addition of an aqueous solution of sodium aluminate with a gradual decrease in volume flow from about 5.0 to about 0.1 m³/h, with a constant volume flow of 11 to 21 m³/h of low-basicity polyaluminium chloride (PAC) through a high shear mixer, increases the shelf life of aluminium-containing coagulant to at least 18 months.

The recovering of aluminium-containing coagulant (step (e) of the method) is carried out by any suitable method known in the art that allows to recover insoluble material in water. In an embodiment of the method of the invention, the recovering of aluminium-containing coagulant (step (e) of the method) is carried out is carried out by sedimentation. In another embodiment of the method of the invention, the recovering of aluminium-containing coagulant (step (e) of the method) is carried out is carried out by filtration.

In the context of the present invention, the "relative basicity" parameter is determined according to DIN EN1302 standard, the "caustic modulus" parameter is determined according to DIN EN 882:2005 standard and the "density" parameter is determined according to EN 17034:2018 standard.

In the context of the present invention, the "shelf-life" is evaluated according to the method described in ASTM E2454-20, ASTM F1980 and ISO 11607. The shelf life of aluminium-containing coagulant is evaluated by using accelerated stability testing based upon the Arrhenius equation known in the art.

The technical and financial advantages of the method of the present invention consist in increasing the intensity of the production process and in differences in the shelf-life of the aluminium-containing coagulants based on ultra-high-basicity polyaluminium chloride (PAC).

The method of the invention can create a wide range of concentrations of an aqueous solution of polyaluminium chloride and is particularly useful for obtaining high concentrations of this substance. Compared to conventional coagulant production methods, the methods described herein are unique since they do not require the use of aluminium metal as a starting material. The products obtained by the methods of the invention are suitable for use in the technology of drinking water treatment and wastewater treatment for various branches of industrial production.

Those skilled in the art will appreciate that the invention described herein is susceptible to variations and modifications other than those specifically described. It is to be understood that the invention includes all such variations and modifications without departing from the spirit or essential characteristics thereof. The invention also includes all of the steps, features, compositions and compounds referred to or indicated in this specification, individually or collectively, and any and all combinations or any two or more of said steps or features. The present disclosure is therefore to be considered as in all aspects illustrated and not restrictive, the scope of the invention being indicated by the appended claims, and all changes which come within the meaning and range of equivalency are intended to be embraced therein.

The foregoing description will be more fully understood with reference to the following Examples. Such Examples, are, however, exemplary of methods of practising the present invention and are not intended to limit the application and the scope of the invention.

## EXAMPLES

The manufacturing method and composition of the proposed aluminium-containing coagulant are explained in the following examples.

### Example 1

The calculated amount of low-basicity PAC with $Al_2O_3$ content of 16.9% (wt. %) and a relative basicity of 39% is fed from the feed tank to the autoclave. Water is added to the device with constant stirring and the low-basicity polyaluminium chloride (PAC) is conditioned to a density of 1.27 $g/dm^3$. After obtaining an aqueous solution of low-basicity polyaluminium chloride (PAC) with calculated parameters from the autoclave, when using a centrifugal pump, the solution is supplied with a constant volume flow rate of 13 $m^3$/h at the input of a high shear mixer with a shear rate of more than 10,000 $s^{-1}$. Simultaneously with the start of the operation of the centrifugal pump, an aqueous solution of sodium aluminate with the determined indicators (22.5% $Al_2O_3$ (wt. %), caustic modulus 1.36, density 1.52 $g/dm^3$) is dosed at the inlet of the high shear mixer with a gradual decrease in volume flow from 4.0 to 0.5 $m^3$/h. After mixing, heating to a temperature of 90±5°C begins and the product is exposed for 2.5 hours, being constantly mixed. Chemical parameters of the finished product: active substance content in terms of $Al_2O_3$ is 15.3% (wt. %) and relative basicity is 72.1%. The shelf life of the product is 18 months (the calculation was carried out according to the method of accelerated ageing at 60°C).

### Example 2

The calculated amount of low-basicity polyaluminium chloride (PAC) with $Al_2O_3$ content of 17.2% (wt. %) and a relative basicity of 43% is fed from the feed tank to the autoclave. Water is added to the device with constant stirring and the low-basicity polyaluminium chloride (PAC) is conditioned to a density of 1.28 $g/dm^3$. After obtaining an aqueous solution of low-basicity polyaluminium chloride (PAC) with calculated parameters from the autoclave, when using a centrifugal pump, the solution is supplied with a constant volume flow rate of 15 $m^3$/h at the input of a high shear mixer with a shear rate of more than 12,000 $s^{-1}$. Simultaneously with the start of the operation of the centrifugal pump, an aqueous solution of sodium aluminate with the determined indicators (21.5% $Al_2O_3$ (wt. %), caustic modulus 1.37, density 1.50 $g/dm^3$) is dosed at the inlet of the high shear mixer with a gradual decrease in volume flow from 5.0 to 1.5 $m^3$/h. After mixing, heating to a temperature of 98±5°C begins and the product is exposed for 1.5 hours, being constantly mixed. Chemical parameters of the finished product: active substance content in terms of $Al_2O_3$ is 15.1% (wt. %) and relative basicity is 72.2%. The shelf life of the product is 19 months (the calculation was carried out according to the method of accelerated ageing at 60°C).

**Example 3**

The calculated amount of low-basicity polyaluminium chloride (PAC) with $Al_2O_3$ content of 16.1% (wt. %) and a relative basicity of 45% is fed from the feed tank to the autoclave. Prepared water is added to the device with constant stirring and the low-basicity PAC is conditioned to a density of 1.29 g/dm³. After obtaining an aqueous solution of low-basicity polyaluminium chloride (PAC) with calculated parameters from the autoclave, when using a centrifugal pump, the solution is supplied with a constant volume flow rate of 17 m³/h at the input of a high shear mixer with a shear rate of more than 16,000 s⁻¹. Simultaneously with the start of the operation of the centrifugal pump, a pre-prepared sodium aluminate solution with the determined indicators (23.5% $Al_2O_3$ (wt. %), caustic modulus 1.35, density 1.56 g/dm³) is dosed at the inlet of the high shear mixer with a gradual decrease in volume flow from 3.0 to 0.1 m³/h. After mixing, heating to a temperature of $93 \pm 5°C$ begins and the product is exposed for 2.0 hours, being constantly mixed. Chemical parameters of the finished product: active substance content in terms of $Al_2O_3$ is 15.6% (wt. %) and relative basicity is 72.4%. The shelf life of the product is 18 months (the calculation was carried out according to the method of accelerated ageing at 60°C).

**Claims**

1. A method for producing aluminium-containing coagulant that have $Al_2O_3$ content of more than 15.0% (wt. %) and relative basicity in the range of $70.0 \div 75.0\%$, wherein the method comprises

   (f) providing an aqueous solution of low-basicity polyaluminium chloride (PAC) having a density of $1.25 \div 1.30$ g/dm³ and wherein the polyaluminium chloride (PAC) has the content of $Al_2O_3$ of $15.0 \div 18.0\%$ (wt. %) and relative basicity in the range of $36.0 \div 47.0\%$;
   (g) providing an aqueous solution of sodium aluminate having the content of $Al_2O_3$ of $20.0 \div 25.0\%$ (wt. %), a caustic modulus of $1.3 \div 1.5$ and a density of $1.45 \div 1.60$ g/dm³;
   (h) mixing the aqueous solution of low-basicity polyaluminium chloride (PAC) of step (a) with the aqueous solution of sodium aluminate of step (b) with a high shear mixer having a shear rate of more than 7000 s⁻¹ and constant mixing, wherein the aqueous solution of low-basicity polyaluminium chloride (PAC) is supplied at constant volume flow rate selected from 11 to 21 m³/h at the inlet of a high shear mixer, and the aqueous solution of sodium aluminate is supplied at gradual decrease in volume flow from initial flow selected from 3.0 - 5.0 m³/h to final flow selected from 1.5 - 0.1 m³/h at the inlet of the high shear mixer;
   (i) heating up to $95 \pm 10°C$ during 1-3 hours under constant mixing;
   (j) cooling at temperature selected from 20°C to 50°C, preferably temperature selected from 20°C to 30°C and recovering aluminium-containing coagulant.

2. The method of claim 1, wherein the shear rate in step (c) is selected from 7000 s⁻¹ to 20,000 s⁻¹.

3. The method of any one of claims 1-2, wherein the temperature of step (e) is selected from 20°C to 30°C.

4. The method of any one of claims 1-3, wherein the "relative basicity" parameter is determined according to DIN EN1302 standard, the "caustic modulus" parameter is determined according to DIN EN 882:2005 standard and the "density" parameter is determined according to EN 17034:2018 standard.

Europäisches
Patentamt

European
Patent Office

Office européen
des brevets

# EUROPEAN SEARCH REPORT

Application Number

EP 23 15 8662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 3 929 666 A (AIBA YOSHIKAZU ET AL) 30 December 1975 (1975-12-30) * claims; example 4 * | 1-4 | INV. C01F7/57 C02F1/52 |
| A,D | US 5 985 234 A (DULKO JAMES M [US]) 16 November 1999 (1999-11-16) * claims; examples * | 1-4 | |
| A | EP 0 769 473 A1 (RHONE POULENC CHIMIE [FR]) 23 April 1997 (1997-04-23) * claims; examples * | 1-4 | |

TECHNICAL FIELDS
SEARCHED        (IPC)

C01F
C02F

The present search report has been drawn up for all claims

| Place of search | Date of completion of the search | Examiner |
|---|---|---|
| Munich | 4 August 2023 | Marucci, Alessandra |

EPO FORM 1503 03.82 (P04C01)

## ANNEX TO THE EUROPEAN SEARCH REPORT
## ON EUROPEAN PATENT APPLICATION NO.

EP 23 15 8662

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2023

| Patent document cited in search report | | Publication date | Patent family member(s) | | Publication date |
|---|---|---|---|---|---|
| US 3929666 | A | 30-12-1975 | AU | 467779 B2 | 11-12-1975 |
| | | | BE | 813805 A | 16-08-1974 |
| | | | CA | 1011085 A | 31-05-1977 |
| | | | CH | 602489 A5 | 31-07-1978 |
| | | | DE | 2418416 A1 | 07-11-1974 |
| | | | ES | 425455 A1 | 16-06-1976 |
| | | | FR | 2226361 A1 | 15-11-1974 |
| | | | GB | 1457655 A | 08-12-1976 |
| | | | HU | 168698 B | 28-06-1976 |
| | | | IE | 39115 B1 | 02-08-1978 |
| | | | IT | 1011756 B | 10-02-1977 |
| | | | JP | S5725492 B2 | 29-05-1982 |
| | | | JP | S49130387 A | 13-12-1974 |
| | | | LU | 69890 A1 | 01-10-1974 |
| | | | NL | 7405270 A | 22-10-1974 |
| | | | SE | 385687 B | 19-07-1976 |
| | | | SU | 799638 A3 | 23-01-1981 |
| | | | US | 3929666 A | 30-12-1975 |
| US 5985234 | A | 16-11-1999 | AU | 7153296 A | 09-04-1997 |
| | | | BR | 9610626 A | 06-04-1999 |
| | | | CA | 2229266 A1 | 27-03-1997 |
| | | | CN | 1196711 A | 21-10-1998 |
| | | | EP | 0851838 A2 | 08-07-1998 |
| | | | US | 5985234 A | 16-11-1999 |
| | | | US | 5997838 A | 07-12-1999 |
| | | | US | 6036935 A | 14-03-2000 |
| | | | WO | 9711029 A2 | 27-03-1997 |
| EP 0769473 | A1 | 23-04-1997 | AT | 188954 T | 15-02-2000 |
| | | | DE | 69606257 T2 | 31-05-2000 |
| | | | EP | 0769473 A1 | 23-04-1997 |
| | | | ES | 2145984 T3 | 16-07-2000 |
| | | | FR | 2740128 A1 | 25-04-1997 |
| | | | GR | 3032949 T3 | 31-07-2000 |
| | | | PT | 769473 E | 31-07-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070092433 A1
- US 3891745 A
- US 3113911 A
- GB 2113666 A
- US 5246686 A
- US 5076940 A
- US 4981673 A
- US 5348721 A
- US 3929666 A
- US 5985234 A